# EUROPEAN PATENT APPLICATION

(11) **EP 4 640 972 A1**
(43) Date of publication of application: **29.10.2025**
(21) Application number: 25162357.5
(22) Date of filing: 07.03.2025
(51) Int. Cl.: E04D 11/00, A01G 9/02

(54) **AN INTEGRATED BUILDING SYSTEM FOR A GREEN ROOF**

(30) Priority: 08.03.2024 EP 24162439
(71) Applicant: Fischer Profil GmbH, 57250 Netphen-Deuz (DE)
(72) Inventor: Kenda, Mario, 57250 Netphen-Deuz (DE); Schmitt, Horst, 57250 Netphen-Deuz (DE); Klappert Trutz, Hermann, 57250 Netphen-Deuz (DE); Kinast, Harald, 57250 Netphen-Deuz (DE)
(74) Representative: Group Intellectual Property Services

(57) **Abstract**

The invention relates to an integrated building system for a green roof comprising at least one roof element for cladding the roof having a plurality of ridges and valleys between the ridges; and a plurality of boxes for vegetating, which are releasably connected to each other, placed on the roof element. The base of the box is in contact with at least one of the valleys of the roof element.

## Description

### Field of the Invention

The invention relates to an integrated building system for a green roof comprising at least one roof element for cladding the roof and a plurality of boxes for vegetating placed on the roof element. The invention also relates to a box for vegetating on a roof, which can be installed on a roof element such as a sandwich panel.

### Background of the Invention

Green spaces in cities have decreased significantly as a result of the rapid and poorly planned urbanization. The insufficiency of the green spaces not only forms urban heat islands near the cities but also leads to poor air and water quality. A roof which allows vegetation to grow on the roofs of the buildings is one of the possible solutions to increase the greenery in the cities. In general, these roofs are categorized as either intensive green roof or extensive green roof. The intensive green roof has a substrate layer having a depth of more than 15 cm and a vegetation layer comprising bushes and trees in combination with ground covers. Although the intensive green roof, also called a rooftop garden, creates usable space for people and increases biodiversity, it is not very effective to reduce stormwater runoff and to improve thermal performance of the building due to the open areas allocated for people use. Moreover, the intensive green roof also needs intensive maintenance. On the other hand, the extensive green roof has a shallow layer of substrate that covers a large area with limited usage area for people. The vegetation layer of the extensive green roof comprises ground cover, sedum, succulents, moss, grass, and herb. Therefore, the extensive green roof lends to reduce stormwater runoff, to improve the thermal performance of the building and to increase biodiversity whilst the required maintenance is minimized.

In EP3901389 (A1) a conventional green roof is disclosed. The green roof comprising a roof surface, a water-resistant layer covering the roof surface, a drainage layer, a substrate, and a vegetation mat. A flexible layer extending above the water-resistant layer and beneath the vegetation mat, which flexible layer comprises a plurality of pockets. The substrate is contained in the pockets. However, as each roof has a different construction, preparing and placing the vegetation mat on a roof is laborious and difficult to automate.

Alternatively, in EP0267367 (A1) a box for cultivating plant such as turfs which can be mounted on the roof of the building is disclosed. The box comprises a box body made of a bottom plate and a circumferential wall integrally connected to the periphery of the bottom plate, hollow ridges formed by elevating a part of the bottom plate, the hollow ridges having the upper surfaces thereof disposed below the upper end of the circumferential wall of the box body and a soil for cultivating plant filled in the box body, wherein the hollow ridges having water drainage apertures on the upper surface thereof and such water drainage apertures communicate with water drainage grooves defined on the rear surface of the hollow ridges. Although the box offers more convenient installation of the vegetation compared to the conventional green roofs, these individual boxes are loosely laid on the roof and secured against wind suction solely by the weight of the substrate and the vegetation. Moreover, when they are installed to the frequently used metal roofs, the boxes can be only in contact with the ridges provided in the metal roofs. Hence, the weight of the boxes cannot be distributed evenly though the ridges and this can create an unbalanced load on the roof.

The invention provides an additional improvement, an additional advantage, or an alternative to the prior art.

### Objectives of the Invention

It is an objective of the present invention to provide an integrated building system for a green roof which is secured against wind suction.

It is also an objective of the present invention to provide an integrated building system for a green roof, which can be installed easily and quickly.

It is also an objective of the present invention to provide an integrated building system for a green roof, minimizing the risk of water penetrating the roof structure.

It is also an objective of the present invention to provide an integrated building system for a green roof, which is compatible with different roof structures.

It is also an objective of the present invention to provide a box for cultivating plants, which can be installed on a roof element such as a sandwich panel.

### Description of the Invention

One or more of the objectives of the invention are realized by providing an integrated building system for a green roof comprising at least one roof element for cladding the roof, wherein the roof element comprises a plurality of ridges and valleys between the ridges and a plurality of boxes for vegetating, which are releasably connected to each other, placed on the roof element. In addition, the base of the box is in contact with at least one of the valleys of the roof element. Thus, as the surface area of the valleys are larger than the surface area of the ridges, the weight of the boxes is more evenly distributed over the entire roof element by means of placing the boxes on the valleys of the roof element compared to the conventional solutions where the weight of the boxes is only transferred to the roof element via the ridges. Furthermore, easy roof installation is achieved by placing the individual boxes on the roof. Moreover, the interconnected boxes create a large bulk resistant to the wind suction.

In a possible embodiment of the invention, the green roof is an extensive green roof. In a possible embodiment of the invention, the integrated building system comprises a plurality of roof elements connected to each other. The box can be placed on a single roof element or on more than one roof element connected to each other.

In a possible embodiment of the invention, the roof element is a sandwich panel comprising a first metal profile, a second metal profile and a core provided between the profiles. The metal profile is made of galvanised, aluminium-zinc alloy coated, pre-finished steel, pre-painted steel or aluminium sheet. Preferably, the metal profile is made of a pre-finished steel, specifically pre-painted steel. The core is preferably made of a rigid polyurethane foam or a high-strength mineral fibre. In another possible embodiment of the invention, the roof element is a metal profile for a roof cladding. The metal profile can be made of a galvanised, aluminium-zinc alloy coated, pre-painted steel or aluminium sheet.

The box is preferably a plastic box. Preferably, the box is made of thermoplastic material or recycled thermoplastic material. The thermoplastic material is selected from the group comprising polypropylene (PP), acrylonitrile butadiene styrene (ABS) or polyethylene (PE). Preferably, the box is made of polyethylene (PE) or recycled polyethylene (PE) due to the good chemical and technical properties of PE. The box can be manufactured by injection moulding or thermoforming.

The box comprises a first part for receiving a substrate layer, a second part that forms the base of the box and that contains a plurality of pockets for collecting and retaining rainwater; at least one opening provided between the first part and the pocket for conveying rainwater from the first part to the pocket. In use, vegetation mat is placed on the substrate layer for obtaining a vegetation layer. The first part and the second part are manufactured as a single piece. The pockets extend from the base to an interface between the fist and second part. The first part extends from the interface to the top of the peripheral edge of the box. In a possible embodiment of the invention, the interface can be formed by the upper surface of the walls separating the pockets. By virtue of the pockets, the integrated building system can safely and reliably retain rainwater and therefore it can reduce the load of the drainage system. Preferably, the second part consists of a plurality of pockets. Preferably, the box has a plurality of drainage holes for draining rainwater overflowing from the pockets out of the box. The drainage holes are provided on the interface between the first and second part of the box. Thus, on one hand the pockets can store enough rainwater to keep the substrate layer moist for a long time, on the other hand, the drainage holes keep the rainwater away from the first part in order to prevent the vegetation layer from being in direct contact with water for a long time.

The vegetation layer can be any one or more of ground cover, sedum, succulents, moss, grass, herb, etc. The substrate layer preferably contains the mixture of organic and inorganic materials. The substrate layer can comprise any one or more of soil, sand, gravel, recycled materials, crushed clay, pearlite, peat, compost, minerals, lava, shale, pumice, recycled brick, etc. The substrate layer can be obtained by filing the boxes with the substrate after the boxes are placed on the roof element. In this case, the first part and the pockets are filled with the substrate. Then, the vegetation layer is obtained by rolling out the vegetation mats onto the substrate layer. Alternatively, the pre-planted boxes can be obtained by forming the substrate layer and the vegetation layer before the boxes are placed on the roof element in a similar way as disclosed above. Then the pre-planted boxes are laid out onto the roof element.

In a possible embodiment of the invention, the integrated building system comprises at least one box placed between two consecutive ridges. In this case, the base of the box is fitted between two consecutive ridges and so the base of the box can be placed on the valley of the roof element. In a possible embodiment of the invention, the short side of the box extends parallel to the ridges of the roof element. Thus, the box can be placed laterally between the consecutive ridges. In another embodiment, the long sides of the box extend parallel to the ridges of the roof element. Thus, the box can be placed between the ridges longitudinally. In a possible embodiment of the invention, the integrated building system comprises at least one box extending longitudinally and/or at least one box extending laterally. The integrated building system can comprise a plurality of boxes extending longitudinally and/or laterally. These flexible layout possibilities enable to cover the roof element as much as possible to create more green space.

In a possible embodiment of the invention, the integrated building system comprises at least one box of which base is in contact with at least two valleys. The base can be in contact with at least two valleys of a single roof element. Alternatively, the base can be in contact with at least two roof elements so that it is in contact with at least one valley of each roof element. In this embodiment, the box is placed so as to pass over at least one ridge. Therefore, the integrated building system can contain boxes of varied sizes to cover the roof element with different configurations without being limited by the ridges of the roof element. For example, the integrated building system can comprise a box having a side which is wider than the valley and which extends perpendicular to the ridges of the roof element. In a possible embodiment of the invention, the box has a recess for receiving the ridge. In a possible embodiment of the invention, the recess extends between the long sides of the box. In another possible embodiment of the invention, the recess extends between the short sides of the box. Preferably, the box comprises at least one recess extending between the short sides of the box and at least one recess extending between the long sides of the box. Thus, the boxes of varied sizes can be laid in both lateral and longitudinal directions.

In a possible embodiment of the invention, the boxes are releasably connected to each other by a connecting element provided on a sidewall of the box overlapping the sidewall of the adjacent box. Preferably, the sidewall of the adjacent box to which the connection element is connected does not contain a connecting element. The connecting element is provided on the outer surface of the sidewall. Preferably, the connecting element protrudes outwards from the sidewall of the box. Preferably, the connecting element extends along the sidewall of the box. In a possible embodiment, the box comprises two connecting elements which are provided on the sidewalls perpendicular to each other.

In a possible embodiment, the connection of two boxes is positioned in a region where the roof element is not connected to another roof element or to any other roof structure.

Thus, the risk of the overflowing rainwater penetrating the roof structure through the screw connections and longitudinal joints connecting two roof elements can be minimized in case rainwater overflows from the box or leaks from the connection of two boxes. In a possible embodiment of the invention, the connection of two boxes is arranged between the ridges. By means of the valleys, rainwater can be diverted away from the critical areas where it can penetrate and harm the integrated building system and/or the roof and it is directed to the areas without impacts and penetrations. In another possible embodiment, the connection of two boxes is arranged above the ridge that is not part of the connection of two roof elements.

Moreover, one or more of the objectives of the invention are realized by a box for vegetating on a roof comprising a first part for receiving a substrate layer; a second part that forms the base of the box and that contains a plurality of pockets for collecting and retaining rainwater; at least one opening provided between the first part and the pocket for conveying rainwater from the first part to the pocket. In addition, the box has a recess for receiving a ridge provided on a roof element on which the box can be placed. In use, vegetation mat is placed on the substrate layer for obtaining a vegetation layer. The first part and the second part are manufactured as a single piece. The pocket extends from the base to the interface between the first and second part. The first part extends from the interface to the peripheral top edge of the box.

The substrate layer can be obtained by filing the boxes with the substrate after the boxes are placed on the roof element. In this case, the first part and the pockets are filled with the substrate. Then, the vegetation layer is obtained by rolling out the vegetation mats onto the substrate layer. Alternatively, the pre-planted boxes can be obtained by forming the substrate layer and the vegetation layer before the boxes are placed on the roof element in a similar way as disclosed above. Then the pre-planted boxes are laid out onto the roof element.

The boxes can have different shapes but preferably, they have a rectangular cross-section.

In a possible embodiment of the invention, box comprises a recess extending between the long sides of the box. Thus, the box can be laid on the roof element in a longitudinal manner. In other words, the box can be installed on the roof element in such a way that the long side of the box is parallel to the ridge of the roof element.

In a possible embodiment of the invention, the box comprises a recess extending between the short sides of the box. Thus, the box can be laid on the roof element laterally. In other words, the box can be installed on the roof element in such a way that the short side of the box is parallel to the ridge of the roof element.

In a possible embodiment of the invention, the box comprises at least one recess extending between the short sides of the box and at least one recess extending between the long sides of the box. Thus, the box can be laid on the roof element either longitudinally or laterally.

The vegetation layer can be any one or more of ground cover, sedum, succulents, moss, grass, herb, etc. The substrate layer is preferably the mixture of organic and inorganic materials. The substrate layer can comprise any one or more of soil, sand, gravel, recycled materials, crushed clay, pearlite, peat, compost, minerals, lava, shale, pumice, recycled brick, etc.

In a possible embodiment, the box has a plurality of drainage holes for draining rainwater overflowing from the pockets out of the box. The drainage holes are provided on the interface between the first and second part of the box.

In a possible embodiment of the invention, the box comprises a connecting element for connecting the box to the adjacent box, provided on at least one sidewall of the box. In a possible embodiment, the box comprises two connecting elements which are provided on the sidewalls perpendicular to each other. The connecting element is provided on the outer surface of the sidewall. Preferably, the connecting element protrudes outwards from the sidewall of the box. The boxes are releasably connected to each other by the connecting element of the box overlapping the sidewall of the adjacent box. Preferably, the sidewall of the adjacent box to which the connection element is connected does not contain a connecting element.

In a possible embodiment of the invention, the box comprises at least one grip. Preferably, the box comprises at least one grip on each short side of the box. These grips make it easier to grasp and carry the boxes. Preferably, the grip is in the form of a recess formed by the sidewall of the box bulging inward.

In a possible embodiment of the invention, the box comprises at least one indent for robotic handling. The indent is provided on the outer surface of the sidewall of the box, preferably on the long side of the box. Robots can easily recognize the pick-up points of the boxes and they can securely grasp and move the boxes. Thus, the boxes can be filled, planted, and installed automatically.

In a possible embodiment of the invention, the recess has preferably a trapezoidal cross-section. However, recess can be in any other form and shape to receive the ridge of the roof element. For example, the roof element may have a ridge in wave form or have a standing seam.

Each possible embodiment disclosed in this text can be combined with the other possible embodiments disclosed in this text if there are no technical constraints.

### Brief Description of the Figures

Fig.1 shows a schematic view of an embodiment of the box.
Fig.2 shows a schematic cross-section view of an embodiment of integrated building system.
Fig.3 shows a schematic cross-section view of another embodiment of integrated building system.
Fig.4 shows a schematic cross-section view of another embodiment of integrated building system.
Fig.5 shows a schematic view of an embodiment of the integrated building system having a box extending laterally.
Fig.6 shows a schematic view of an embodiment of the integrated building system having a box extending longitudinally.

### Detailed Description of the Figures

In this detailed description, the subject matter is explained with references to examples without forming any restrictive effect only in order to make the subject more understandable.

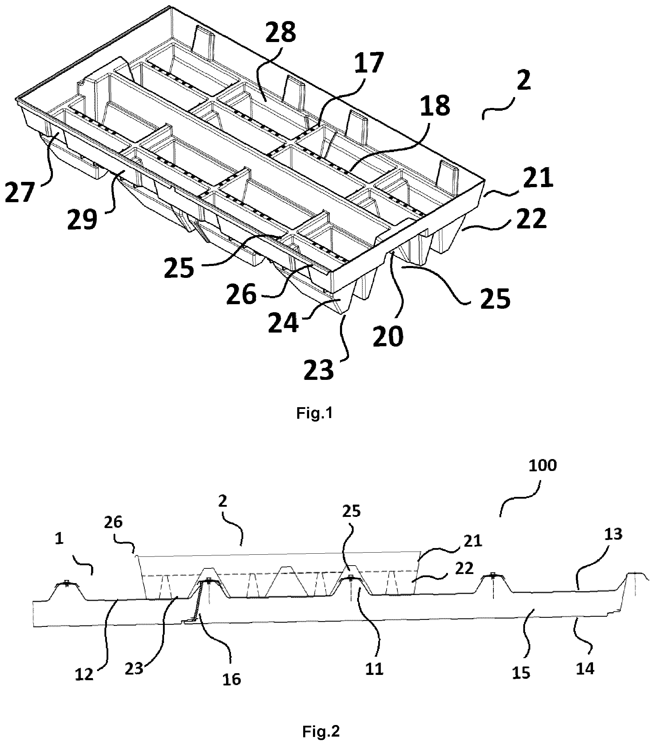

As shown in Fig.1, the box (2) comprises a first part (21) and a second part (22) that forms the base (23) of the box. The second part (22) contains a plurality of pockets (24) for collecting and retaining rainwater. Water flows from the first part (21) to the second part (22) through the openings (28) provided between the first (21) and the second parts (22). The openings are formed on the interface (17). The drainage holes (18) are also formed on the interface (17). The box (2) comprises a recess (25) for receiving a ridge (11) of the roof element (1). As an example, the box (2) has one recess (25) extending between the long sides of the box and two recesses (25) extending between the short sides of the box. The box (2) comprises a connecting element (26) for connecting the box (2) to the adjacent box, provided on at least one sidewall (29) of the box (2). The box (2) comprises one or more indents (27) for robotic handling. The indents (27) are provided on the outer surface of the sidewall (29) of the box, specifically on the long side of the box. The box comprises at least one grip (20) on each short side of the box (2). These grips (20) also make it easier to grasp and carry the boxes. Preferably, the grips are in the form of a recess formed by the sidewall of the box bulging inward.

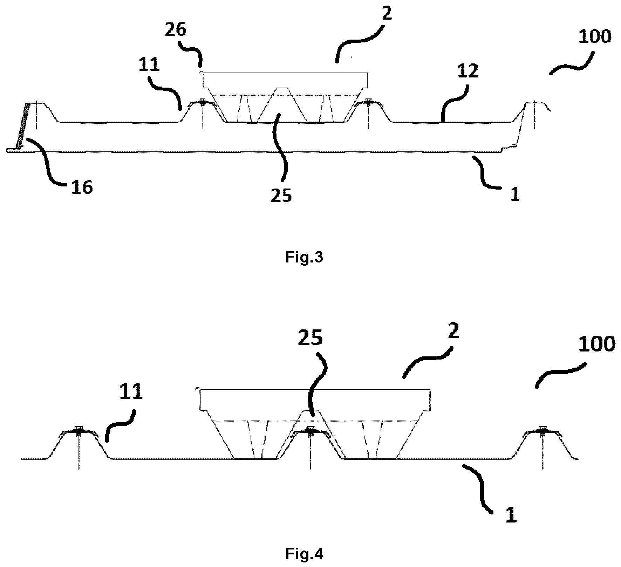

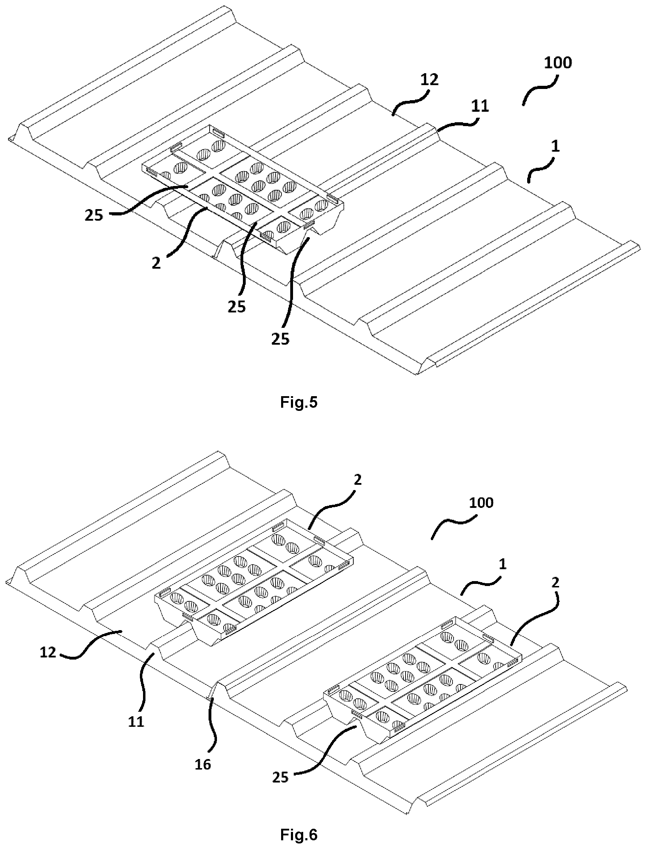

As shown in Figs. 2 and 3, the integrated building system (100) comprises a roof element (1) and a box (2) placed on the roof element (1). The roof element (1) is a sandwich panel comprising a first metal profile (13) and a second metal profile (14), a core (15) provided between the profiles (13,14). In Fig.2, two roof elements (1) are connected to each other by a longitudinal joint (16). The recesses (25) receive two ridges (11) of the roof elements (1) and the base (23) of the box is in contact with three valleys (12) of these roof elements (1). The connecting element (26) is positioned between two ridges (11) so the connection (not shown in figures) of two boxes (2) can be arranged between the ridges (11). In Fig.3, the integrated building system (100) comprises a box (2) placed between two consecutive ridges (11). The connecting element (26) of the box (2) is positioned above the ridge (11) of the sandwich panel. This ridge (11) is not part of the connection of two sandwich panels so the connection (not shown in figures) of two boxes (2) can be arranged at a secured distance from the longitudinal joint (16). In both two examples in Fig. 2 and 3, the connection of two boxes can be positioned in a region where the roof element is not connected to another roof element. In fig. 4, the integrated building system (100) comprises a roof element (1) wherein the roof element is a metal profile. The metal profile has a trapezoidal cross-section and therefore the recesses (25) of the box (2) have trapezoidal cross-section as well. In Fig.5, the integrated building system (100) comprises a box (2) extending laterally. In Fig.6, the integrated building system (100) comprises two boxes (2) extending longitudinally. One of them is placed between two consecutive ridges (11). The other one is placed over the ridge (11) so the recess (25) of the box receives the ridge (11) of the sandwich panel.

**Reference List**

| | |
|---|---|
| Roof element | **1** |
| Ridge | **11** |
| Valley | **12** |
| First metal profile | **13** |
| Second metal profile | **14** |
| Core | **15** |
| Longitudinal Joint | **16** |
| Interface | **17** |
| Drainage Hole | **18** |
| Box | **2** |
| Grip | **20** |
| First Part | **21** |
| Second Part | **22** |
| Base of the box | **23** |
| Pocket | **24** |
| Recess | **25** |
| Connecting element | **26** |
| Indent | **27** |
| Opening | **28** |
| Sidewall of the box | **29** |
| Integrated building system | **100** |

## Claims

1. An integrated building system (100) for a green roof comprising;
at least one roof element (1) for cladding the roof, wherein the roof element comprises a plurality of ridges (11) and valleys (12) between the ridges (11); and a plurality of boxes (2) for vegetating, which are releasably connected to each other, placed on the roof element (1);
**characterized in that**
the base (23) of the box (2) is in contact with at least one of the valleys (12) of the roof element (1).

2. The integrated building system (100) according to claim 1, wherein the roof element (1) is a sandwich panel comprising a first metal profile (13), a second metal profile (14) and a core (15) provided between the profiles (13,14).

3. The integrated building system (100) according to claim 1, wherein the roof element (1) is a metal profile for a roof cladding.

4. The integrated building system (100) according to any one of the preceding claims, wherein the integrated building system (100) comprises at least one box extending longitudinally and/or at least one box extending laterally.

5. The integrated building system (100) according to any one of the preceding claims, wherein the integrated building system (100) comprises at least one box (2) placed between two consecutive ridges (11).

6. The integrated building system (100) according to any one of the preceding claims, wherein the integrated building system (100) comprises at least one box (2) of which base (23) is in contact with at least two valleys (12).

7. The integrated building system (100) according to any one of the preceding claims, wherein the boxes (2) are releasably connected to each other by a connecting element (26) provided on a sidewall (29) of the box (2) overlapping the sidewall (29) of the adjacent box (2).

8. The integrated building system (100) according to any one of the preceding claims, wherein the connection of two boxes (2) is positioned in a region where the roof element (1) is not connected to another roof element (1) or to any other roof structure.

9. The integrated building system (100) according to any one of the preceding claims, wherein the connection of two boxes (2) is arranged between the ridges (11).

10. The integrated building system (100) according to any one of the preceding claims, wherein the connection of two boxes (2) is arranged above the ridge (11) that is not part of the connection of two roof elements (1).

11. The integrated building system (100) according to any one of the preceding claims, wherein the green roof is an extensive green roof.

12. A box (2) for vegetating on a roof comprising
a first part (21) for receiving a substrate layer;
a second part (22) that forms the base (23) of the box (2) and that contains a plurality of pockets (24) for collecting and retaining rainwater;
at least one opening (28) provided between the first part (21) and the pocket (24) for conveying rainwater from the first part (21) to the pocket (24);
**characterized in that**
the box (2) comprises a recess (25) for receiving a ridge (11) provided on a roof element (1) on which the box (2) can be placed.

13. The box (2) according to claim 12, wherein box (2) comprises a recess (25) extending between the long sides of the box (2).

14. The box (2) according to claim 12 or claim 13, wherein the box (2) comprises a recess (25) extending between the short sides of the box (2).

15. The box (2) according to any one of the preceding claims 12-14, wherein the box (2) comprises a connecting element (26) for connecting the box (2) to the adjacent box (2), provided on at least one sidewall (29) of the box.
